# EUROPEAN PATENT APPLICATION

(11) **EP 3 213 800 A1**
(43) Date of publication of application: **06.09.2017**
(21) Application number: 17158765.2
(22) Date of filing: 01.03.2017
(51) Int. Cl.: A63G 7/00, A63G 31/16

(54) **A SEAT**

(30) Priority: 01.03.2016 GB 201603562
(71) Applicant: Figment Productions Limited, Walnut Tree Close Guidford, Surrey GU1 4UG (GB)
(72) Inventor: Reveley, Simon, Guildford, Surrey GU1 4UG (GB)
(74) Representative: Bridle, Andrew Barry

(57) **Abstract**

A seat for a roller coaster having a headset secured thereto via a tether cable, wherein the headset has secured thereto one end of the tether cable and the other end tether cable is secured to the seat.

## Description

The present invention relates to a seat for use with a roller coaster vehicle.

Seats for roller coaster vehicles have been known for some time. However, a recent innovation relating to roller coasters is to provide a virtual reality experience for the passenger. In such cases, the images seen on a screen of a virtual reality headset (also known as a head mounted display or HMD), and optionally also sound effects, is synchronised with the movement of the roller coaster vehicle. Examples of virtual reality roller coaster concepts are described in the specifications of GB2542434, WO2016/023817 and US 6,179,619. The terms "headset", "head mounted display" and "HMD" are used herein interchangeably and are considered to have the same meaning.

It is desired to provide a virtual reality headset for each seat of the roller coaster vehicle. However, it is further desired to secure the headset in circumstances where the seat is unoccupied or in the event that the headset becomes detached from a user.

According to a first aspect of the invention, there is provided a seat for a roller coaster having a headset secured thereto via a tether cable, wherein one end of the tether cable is secured to the headset and the other end tether cable is secured to the seat.

By having the headset secured to the seat via the tether cable, the headset remains attached to the seat when not in use. Furthermore, the tether cable prevents the headset being removed intentionally or unintentionally from the seat.

The term "tether cable" as used herein is intended to cover all flexible elongate elements that have sufficient strength and integrity to prevent the headset from breaking free of the cable. Thus, the tether cable may be substantially inelastic, such as a metal cable, or it may be capable of elastic deformation, such as a cable formed from a polymeric material. Furthermore, the cable may be formed from a single strand of material or from multiple strands of material braided together. Optionally, the cable is coated, such as with a polymeric coating. Such a coating may prevent or minimise damage or degradation to the tether cable. It will be appreciated by those skilled in the art that the tether cable is different to a data cable which may be used to transmit data to and/or from the headset, as data cables typically do not have the required strength and integrity to secure the headset to the seat.

As the function of the tether cable is to prevent the headset becoming separated from the seat, the headset may be non-releasably coupled to the tether cable. Alternatively, the tether cable may be secured to the headset via a locking element, wherein the locking element has a locked configuration in which detachment of the tether cable from the headset is prevented and an unlocked configuration in which the tether cable may be released or detached from the headset.

The headset suitably includes a headband via which the headset may be releasably secured to the head of a user. The tether cable may be secured to the headband of the headset.

In an embodiment of the invention, the headset is secured by a pair of tether cables. The tether cables may be secured to opposite sides of the headset. In embodiments in which the headset includes a headband, the tether cables may be secured to opposite sides of the headband. A pair of tether cables provides better control of the headset in the event that the headset becomes loose.

In an embodiment of the invention, the seat is a roller coaster seat.

It will be appreciated that the seat of the invention defined above may be any seat used in roller coasters or other theme park/entertainment rides. However, the seat suitably forms part of a vehicle, especially a vehicle that may be subject to relatively high G-forces. An example of such a vehicle is a roller coaster vehicle, i.e. a vehicle which is configured to travel along the track of a roller coaster. Other such vehicles include those which move about a fixed point or axis in two or three dimensions. The vehicle may include a plurality of seats. Thus, a second aspect of the invention may provide a vehicle which includes a seat as defined herein. The vehicle may include two or more such seats.

In an embodiment of the invention according to the first or second aspects of the invention, the headset includes a screen that is configured to display images, which are suitably pre-programmed images. The headset may further include one or more lenses located in front of the screen (i.e. between the screen and the eyes of a user in use). The use of lenses allows the headset to provide different user-experiences. The screen may be a flat screen, and may furthermore be removable from the headset. This allows the screen to be replaced in the headset in the event that it become damaged or faulty.

The screen and optional lens(es) may define a virtual reality screen or an augmented reality screen. It will be appreciated that a virtual reality screen displays a computer-generated image, whereas an augmented reality screen overlies a true-life background with additional, computer-generated images or content, thus providing a mixture of real images and computer-generated (virtual) images. Virtual reality headsets are now becoming commercially available, such as the Samsung Gear VR headset and the Oculus Rift headset. Such commercially available headsets may be adapted for use in the present invention.

In order to provide a more immersive experience for the user, the headset may include one or more speakers. The speakers may be in addition to or as an alternative to the screen. Thus, the headset may provide images, sounds (for example a commentary or sound effects) or both images and sounds to the user.

In embodiments in which the seat may be used in an outdoor environment and the seat may be uncovered, the headset optionally includes a detachable cover. The detachable cover may be water resistant or water proof. Additionally or alternatively the detachable cover may prevent or minimise the ingress of dirt or dust into the headset in use, thereby contaminating or damaging it.

In embodiments of the invention, the seat typically includes a restraining element (i.e. a passenger restraining element). Such restraining elements are provided to prevent passengers being thrown from or around the seat in use. Optionally, the tether cable is secured to the seat via the restraining element. The seat may include a seat body and the restraining element is typically movable relative to the seat body. For example, the seat body may define a passenger receiving portion (e.g. a seat base upon which the passenger sits in use) and the restraining element may move relative to the passenger receiving portion to permit easier access to the passenger receiving portion. By securing the tether cable to the restraining element, the tether cable is capable of moving with the restraining element and does not interfere with a user's access to the passenger receiving portion of the seat.

Typically, the restraining element includes at least one rigid bar member and the rigid bar member may be movable relative to the seat body, e.g. the passenger receiving portion of the seat body. For example, the rigid bar member may be rotationally coupled relative to the seat body or it may be hingedly coupled relative to the seat body. Where the restraining element is movable relative to the seat body, it may have a first configuration in which a user is restrained by the restraining element in a passenger receiving portion defined by the seat body, and a second configuration in which the user is not restrained or is released. By having the headset tether cable secured to the seat via the restraining element, the headset may be located adjacent to the user when the restraining element is in its first configuration and it may be moved away from the user when the restraining element is in its second configuration so as not to obstruct access to the passenger receiving portion of the seat body before and after the ride.

The seat may include a container or a pouch which is configured to receive therein the headset. For example, the restraining element may carry the pouch. In this way, if the seat is unoccupied, the headset may be securely retained within the container or pouch during a ride and not be thrown around as a result of the physical forces generated by and/or experienced by the seat. To prevent the undesired egress of the headset from the container or pouch during the motion of the seat in use, the container or pouch may include a latchable cover or lid. The cover or lid may be latched via a fastener, such as a zip fastener or a hook and eye-type fastener (e.g. a fastener available under the trade mark Velcro). Alternatively, the pouch or container may comprise a main body portion and a cover, wherein the main body portion carries or defines one part of a two-part latch and the cover carries or defines a second part of the two-part latch, wherein the cover may be secured to the main body portion when the latch is closed and the cover may be opened to provide access to the pouch or container when the latch is released.

In an embodiment of the invention, the seat comprises a seat body and a seat body support, wherein the seat body may be supported by the seat body support, and wherein the seat body may define a user receiving portion. The seat body support may form part of the vehicle in embodiments in which the seat forms a part of a vehicle.

The seat may include an electrical power supply and a power supply cable configured to electrically connect the headset to the power supply. The power supply cable may be located adjacent to the tether cable or a portion thereof. The electrical power supply may provide electrical power to two or more seats.

The headset suitably further includes a controller which controls images displayed on the screen of the headset (in embodiments where the headset includes a screen) and/or controls sounds emitted from one or more speakers (in embodiments where the headset includes one or more speakers). The controller may also include one or more motion sensors to determine the physical location of the seat in use. In embodiments in which the seat forms part of a roller coaster vehicle, the headset transmits content visually and/or audibly to a user as the roller coaster vehicle circulates about a track. The controller may include a user interface. The user interface may allow a user to select certain pre-programmed content and/or it may allow the user to re-set the content to the beginning for the next ride. Thus, the user interface may comprise a touchscreen and/or one or more buttons. The user in this case may be a passenger in the seat. Additionally or alternatively, the user may be a host or operator of a vehicle which includes one or more seats.

The controller may form a part of the headset, it may be carried by the seat and connected to the headset via a wired or wireless connection, or it may be remote from the seat, in which case, the headset or the seat may include a receiver which is adapted or configured to receive signals from the controller.

In an embodiment, the controller may be carried by the seat and is suitably electrically connected to the headset via a data cable (i.e. a control cable). The data cable may be located adjacent to the tether cable or a portion thereof. In embodiments in which the headset includes both a power supply cable and a data cable, the cables may be located adjacent to each other or a single common cable may be configured to act as both a power supply cable and a data cable. In embodiments in which a single common cable provides both power and control signals to the headset, the electrical power source may be connected to the controller and the headset may be powered from the electrical power source via the controller.

The skilled person will appreciate that the features described and defined in connection with the aspects of the invention and the embodiments thereof may be combined in any combination, regardless of whether the specific combination is expressly mentioned herein. Thus, all such combinations are considered to be made available to the skilled person.

An embodiment of the invention will now be described, by way of example only, with reference to the accompanying drawings in which:
Figure 1 is a front elevational representation of a pair of adjacent seats according to the invention;
Figure 2 is a perspective view of the passenger restraining element shown in Figure 1;
Figure 3 is a perspective view of a headset shown in Figure 1; and
Figure 4 is a perspective view of the seats shown in Figure 1 mounted in a roller coaster vehicle.

For the avoidance of doubt, the skilled person will appreciate that in this specification, the terms "up", "down", "front", "rear", "upper", "lower", "width", etc. refer to the orientation of the components as found in the example when installed for normal use as shown in the Figures.

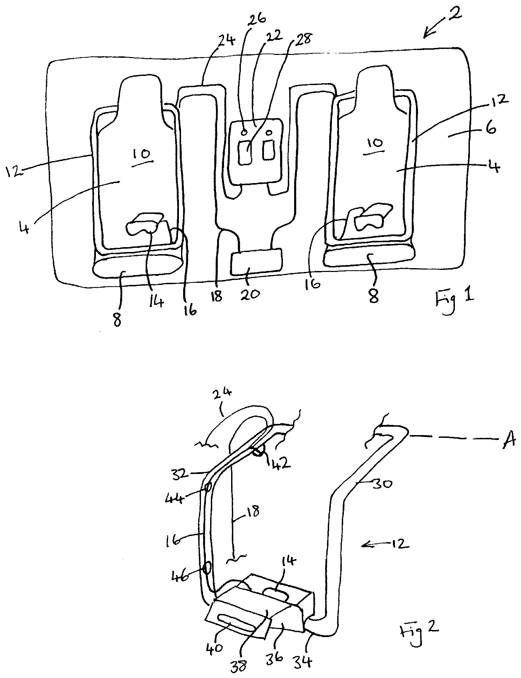

Figure 1 shows a pair of seats 2, wherein the pair of seats 2 is formed by a pair of passenger receiving portions 4 defined by a seat body which is supported by a common seat support 6. Each passenger receiving portion 4 comprises a seat squab 8 and a shaped upright back support 10. It also includes a passenger restraining element 12, which is shown in more detail in Figure 2 and discussed below.

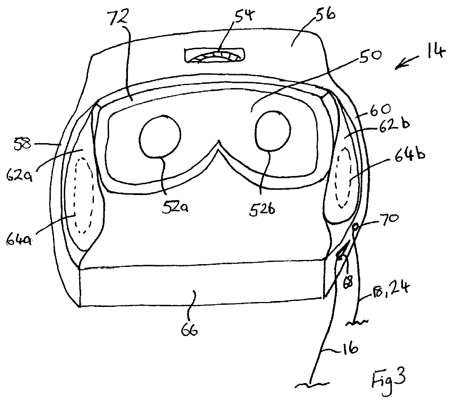

Each passenger receiving portion 4 has associated with it a headset 14. The headset 14 is shown in Figure 3 and discussed in more detail below. The headset is secured to the respective passenger receiving portion 4 by a tether cable 16. The headset is powered via a power cable 18 which connects the headset to a rechargeable battery pack 20. The rechargeable battery pack 20 powers both of the headsets 14 that are associated with the seat 2.

A controller 22 is carried by the common seat support 6 and is connected to each of the headsets 14 via a data cable 24. The controller 22 includes a control system (not shown) for each headset 14 that allows the content supplied to the respective headset 14 to be controlled. For example, the controller 22 may control video content supplied to the headset 14 and/or an audible content supplied to the headset 14.

The controller 22 includes a re-set button 26 which allows a user to re-set the content prior to the subsequent ride and a touchscreen user interface 28 that permits a user to modify or alter the content transmitted to the headset 14. The user in this case may be a passenger about to ride on the roller coaster or it may be an operator or host associated with the ride or both. Thus, the passenger may select the desired content before sitting in the seat or an operator/host may re-set the content prior to the start of the ride and/or alter the content or user-experience once the passenger is seated.

Figure 2 shows a more detailed representation of the passenger restraining element 12. The restraining element 12 has a pair of opposed shoulder restraint members 30, 32 in the form of shaped rigid bars. The upper portions of the shoulder restraint members 30, 32 are coupled to a pivot mechanism (not shown) located within the seat support 6. The pivot mechanism causes the shoulder restraint members 30, 32 to pivot about a pivot axis A to define an access configuration, in which the restraint members 30, 32 are moved away from the back support 10, and a restraining configuration in which the restraint members restrain a passenger against movement away from the passenger receiving portion 4 of the seat 2. Such pivot mechanisms are well known in the field of roller coaster vehicles and will not be described in more detail herein.

A lap member 34, also in the form of a rigid bar, joins the lower ends of the shoulder restraint members 30, 32. The lap member 34 carries a pouch 36 which defines therein a cavity which is sized to receive therein the headset 14. The pouch is reversibly closable via a flap 38 and may be latched in its closed configuration via a hook and eye fastener (e.g. a Velcro ™ fastener). As shown in Figure 2, one part 40 of the hook and eye fastener is secured to the flap 38 and the other part (not shown) is secured to a portion of the pouch 36 which is adjacent to the distal end of the flap 38 in its closed configuration.

One of the shoulder restraint members 32 includes a tether cable anchor 42 to which the tether cable 16 is anchored. The shoulder restraint member 32 further carries a pair of tether cable guide elements 44, 46 which are used to route the tether cable 16 along the shoulder restraint member 32.

The power cable 18 and the data cable 24 are coupled to the tether cable 16 at a point adjacent to where the tether cable 16 is anchored to the cable anchor 42. In this way, the tether cable 16, the power cable 18 and the data cable 24 are all routed together along the shoulder restraint member 32 before being operably connected to the headset 14.

Detachable padded covers (not shown in Figure 2 for reasons of clarity) are located over shoulder restraint member 30 and over both the shoulder restraint 32 and routed cables 16, 18, 24. A lower portion of the pouch 36 may be padded or a separate lap member padded cover may be provided to cover the lap member 34 of the restraining element 12.

Figure 3 shows a headset 14 for use with the invention in more detail. The headset includes a commercially available virtual reality module 50, such as a Samsung Gear VR. Such modules include a pair of lenses 52a, 52b to focus the visual content displayed on a screen (not shown) of the module 50 and a focus wheel 54 to vary the distance of the lenses 52a, 52b from the screen, thereby adjusting the focus of the lenses for the individual user.

The virtual reality module 50 is located within a protective cover 56 made from a water resistant material. The protective cover 56 entirely envelopes the virtual reality module 50 with the exception of a small aperture defined in an upper portion of the cover 56 to permit access to the focus wheel 54 of the virtual reality module 50. The cover 56 includes a pair of side portions 58, 60 which extend rearwardly from the module 50. The side portions 58, 60 each define a cavity 62a, 62b within which are located a respective one of a pair of speakers indicated by the dashed lines 64a, 64b. While, the outwardly facing surfaces of the side portions 58, 60 are formed from the water resistant material, the inwardly facing surfaces of the side portions 58, 60 are formed from a softer, mesh material, as the inwardly facing surfaces of the side portions 58, 60 will be in contact with the sides of a user's head in use. In addition, the mesh material permits better sound transmission from the speakers 64a, 64b.

The speakers 64a, 64b are electrically connected to the virtual reality module 50.

The distal ends of the side portions 58, 60 are joined by a strap 66 formed from an elastomeric material. The two side portions 58, 60 and the strap 66 together define a headband, namely a portion of the headset 14 which in use is located around the head of a user.

One side portion (side portion 60 as shown in Figure 3) has an attachment point 68 to which is secured one end of the tether cable 16. In this way, even if the headset 14 becomes dislodged from the head of a user in use, it will remain attached to the seat 2 via the tether cable 16 being anchored at its other end to the shoulder restraint member 32. The side portion 60 further includes a cable aperture 70 through which the data and power cables 18, 24 pass for electrical connection to the virtual reality module 50.

A replaceable hygiene component 72 is releasably attached to the front of the virtual reality module 50. Such an arrangement allows each new user to have a fresh hygiene component 72 located between their face and the virtual reality module 50. This should prevent or mitigate the transmission of skin-borne bacteria between users. The hygiene component 72 is replaced after each use of the headset 14. The hygiene components may be disposable (i.e. they may be single use only components) or they may be capable of sterilisation and therefore are re-usable.

It will be appreciated that for some commercially available virtual reality modules 50, the power cable and the data cable may be formed by a common cable which is configured to provide both power and control signals to the module 50. In such an embodiment, the power cables 18 may connect the battery pack 20 to the controller 22 and the data cables 24 may provide both electrical power and control signals from the controller 22 to the headset 14.

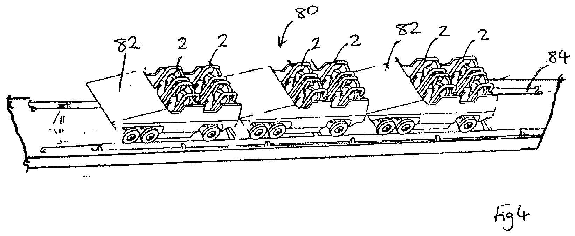

Figure 4 shows the seat 2 installed in a roller coaster vehicle 80. The roller coaster vehicle 80 comprises a train of three roller coaster units 82, wherein each roller coaster unit 82 includes two seats 2, each of which comprise a pair of passenger receiving portions 4 carried by a common frame support 6. Thus, each roller coaster unit 82 is able to accommodate four passengers.

The roller coaster vehicle is configured to run on a continuous track 84, which is well known in the field of roller coasters.

## Claims

1. A seat for a roller coaster having a headset secured thereto via a tether cable, wherein the headset has secured thereto one end of the tether cable and the other end tether cable is secured to the seat.

2. A seat for a roller coaster according to Claim 1, wherein the seat comprises a seat body and a support frame configured to support the seat body.

3. A seat for a roller coaster according to Claim 1 or Claim 2, wherein the headset includes a screen.

4. A seat for a roller coaster according to Claim 3, wherein the headset further includes or is connected to a controller configured to control the images displayed on the screen.

5. A seat for a roller coaster according to Claim 4, wherein the controller is separate from the headset and the headset is electrically connected to the headset via a data cable.

6. A seat for a roller coaster according to any of Claims 1 to 5, wherein the seat includes a pouch configured to receive therein the headset.

7. A seat for a roller coaster according to Claim 6, wherein the pouch includes a latchable cover.

8. A seat for a roller coaster according to any of Claims 1 to 7, wherein the seat includes a passenger restraining element and the tether cable is secured to the vehicle seat via the passenger restraining element.

9. A seat for a roller coaster according to Claim 8, wherein the passenger restraining element includes at least one rigid bar.

10. A seat for a roller coaster according to Claim 8 or Claim 9, wherein the seat includes a seat body which defines a passenger receiving portion and the restraining element is movable relative to the seat body such that it has a first configuration in which user is restrained against the seat body by restraining element and a second configuration in which user is not restrained.

11. A seat for a roller coaster according to any of Claims 8 to 10, wherein the seat further includes a pouch and the pouch is carried by the passenger restraining element.

12. A seat for a roller coaster according to any of Claims 1 to 11, wherein the seat includes an electrical power supply and a power supply cable electrically connects the power supply to the headset.

13. A roller coaster seat having a head mounted display secured thereto via a tether cable, wherein one end of the tether cable is secured to the HMD and the other end of the tether cable is secured to seat, and wherein the seat includes a passenger restraining element and the tether cable is secured to the seat via the passenger restraining element.

14. A roller coaster vehicle including a seat according to any of Claims 1 to 12, wherein the roller coaster vehicle is configured to travel along a continuous track.

15. A roller coaster vehicle according to Claim 14, wherein the vehicle contains two or more seats.
